# EUROPÄISCHE PATENTSCHRIFT

(11) **EP 1 427 948 B1**
(45) Veröffentlichungstag und Bekanntmachung des Hinweises auf die Patenterteilung: **30.03.2011**
(21) Anmeldenummer: 02758433.3
(22) Anmeldetag: 06.08.2002
(51) Int. Cl.: F16D 25/12, F16D 25/10

(54) **KOMBINATION AUS MEHRFACH-KUPPLUNGSEINRICHTUNG UND ELEKTROMASCHINE**
COMBINATION OF MULTIPLE CLUTCH SYSTEM AND ELECTRIC MACHINE
COMBINATION D'UN SYSTEME D'EMBRAYAGE MULTIPLE ET D'UNE MACHINE ELECTRIQUE

(30) Priorität: 21.09.2001 DE 10146606
(43) Veröffentlichungstag der Anmeldung: 16.06.2004
(73) Patentinhaber: ZF Sachs AG, 97424 Schweinfurt (DE)
(72) Erfinder: EBERT, Angelika, 97421 Schweinfurt (DE); GROSSPIETSCH, Wolfgang, 97422 Schweinfurt (DE); KUNDERMANN, Wolfgang, 97422 Schweinfurt (DE); KRAUS, Paul, 97464 Niederwerrn (DE)
(86) Internationale Anmeldenummer: PCT/EP2002/008751
(87) Internationale Veröffentlichungsnummer: WO 2003/027525

(56) Entgegenhaltungen:
- WO-A-99/00199
- FR-A- 2 799 251
- GB-A- 2 191 252
- US-A- 2 505 450
- US-A- 3 080 774
- US-A- 4 205 739

## Beschreibung

### Technisches Gebiet

Die Erfindung betrifft eine kombination ans einer Mehrfach-Kupplungseinrichtung, ggf. Doppel-Kupplungseinrichtung und einer Elektromaschine ggf. einer Kurbelwellenstartanordnung, für die Anordnung in einem Antriebsstrang zwischen einer Antriebseinheit und einem Getriebe, wobei die Kupplungseinrichtung eine einer ersten Getriebeeingangswelle des Getriebes zugeordnete erste Lamellen-Kupplungsanordnung und eine einer zweiten Getriebeeingangswelle des Getriebes zugeordnete zweite Lamellen-Kupplungsanordnung aufweist zur Momentenübertragung zwischen der Antriebseinheit und dem Getriebe, wobei von den Getriebeeingangswellen wenigstens eine als Hohlwelle ausgebildet ist und eine der Getriebeeingangswellen durch eine andere, als Hohlwelle ausgebildete Getriebeeingangswelle verläuft, wobei die Kupplungseinrichtung eine an einer Abtriebswelle der Antriebseinheit direkt oder indirekt angekoppelte oder ankoppelbare Eingangsseite aufweist, die mit eingangsseitigen Lamellen eines ersten Lamellenpakets der ersten Kupplungsanordnung und eingangsseitigen Lamellen eines zweiten Lamellenpakets der zweiten Kupplungsanordnung in Drehmitnahmeverbindung steht oder bringbar ist, wobei ein ausgangsseitiger Lamellenträger der ersten Kupplungsanordnung mit der ersten Getriebeeingangswelle im Sinne einer Drehmitnahme gekoppelt oder koppelbar ist und ein ausgangsseitiger Lamellenträger der zweiten Kupplungsanordnung mit der zweiten Getriebeeingangswelle im Sinne einer Drehmitnahme gekoppelt oder koppelbar is.

### Stand der Technik

Derartige Kombinationen sind aus verschiedenen deutschen Patentanmeldungen der Anmelderin bekannt, es wird beispielsweise auf die DE 100 04 179 A1 verwiesen. Bei der bekannten, auch als "Doppelkupplung" bezeichneten Doppel-Kupplungseinrichtung weisen das erste und das zweite Lamellenpaket unterschiedliche Innen- und Außendurchmesser auf, und zwar derart, dass der Innendurchmesser des einen Lamellenpakets deutlich größer als der Außendurchmesser des anderen Lamellenpakets ist. Das eine Lamellenpaket umgibt radial außen das andere Lamellenpaket; beide Lamellenpakete sind dabei etwa im gleichen Axialbereich angeordnet. Es resultiert eine entsprechend große Radialabmessung der Doppelkupplung. Ein Vorteil der bekannten Anordnung ist, dass von radial innen dem radial inneren Lamellenpaket zugeführtes Kühlöl nach Passieren dieses Lamellenpakets das radial äußere Lamellenpaket erreicht, so dass auf Grundlage eines oder mehrerer Kühlölströme eine hinreichende Kühlung derjenigen Kupplungsanordnung erreicht werden kann, an der gerade, etwa aufgrund von Schlupfbetrieb, Kühlungsbedarf besteht. Besteht am radial äußeren Lamellenpaket Kühlungsbedarf, so schadet es nichts, dass das Kühlöl zumindest teilweise das radial innere Lamellenpaket zuvor passieren muss. Besteht am radial inneren Lamellenpaket Kühlungsbedarf, so schadet es ebenfalls nichts, dass das Kühlöl von diesem zumindest teilweise noch dem radial äußeren Lamellenpaket zugeführt wird.

### Aufgabe der Erfindung

Aufgabe der Erfindung ist es, eine Kombination der eingangs genannten Art bereitzustellen, die radial kompakter ausführbar ist, so dass die Doppelkupplung auch im Falle eines relativ stark radial beschränkten Bauraums zum Einsatz kommen kann.

### Darstellung der Erfindung

Die Erfindung betrifft eine Kombination aus einer Kupplungseinrichtung bzw. einem erfindungsgemäßen Kupplungssystem und einer Elektromaschine, ggf. einer Kurbelwellenstarteranordnung, wobei die Elektromaschine eine mit der Abtriebswelle in Drehmitnahmeverbindung stehenden oder bringbaren Rotor und eine unter Vermittlung eines Gehäuses des Getriebes oder/und eines Gehäuses der Antriebseinheit abgestützten Stator aufweist, wobei der Rotor und der Stator die Kupplungseinrichtung ringartig radial außen umgeben.

Nach dem Erfindungsvorschlag ist es möglich, die Mehrfach-Kupplungseinrichtung, ggf. Doppel-Kupplungseinrichtung, radial innerhalb einer Elektromaschine, wie etwa ein Kurbelwellenstartergenerator, zu integrieren. Es kann eine insgesamt sehr kompakte Anordnung erreicht werden, die sich vorteilhaft in Kraftfahrzeug-Antriebsstränge integrieren lässt.

Es wird insbesondere daran gedacht, dass das erste und das zweite Lamellenpaket etwa im gleichen Radialbereich bezogen auf die Drehachse angeordnet sind und vorzugsweise im Wesentlichen gleiche Innen- und Außendurchmesser aufweisen.

Die Kupplungsanordnungen können einen gemeinsamen, eingangsseitig angeordneten Außenlamellenträger aufweisen. Eine andere Möglichkeit ist, dass ein der ersten Kupplungsanordnung zugehöriger erster Außenlamellenträger und ein der zweiten Kupplungsanordnung zugehöriger zweiter Außenlamellenträger, die eingangsseitig angeordnet sind, drehfest miteinander verbunden, ggf. miteinander verschweißt sind.

Die Kupplungsanordnungen werden in der Regel vermittels eines jeweiligen, in die Kupplungseinrichtung integrierten hydraulischen Nehmerzylinders betätigbar sein. Dabei kann ein der ersten Kupplungsanordnung zugehöriger Betätigungskolben und ein der zweiten Kupplungsanordnung zugehöriger Betätigungskolben vermittels des jeweiligen Nehmerzylinders entgegen der Rückstellkraft einer jeweiligen Rückstellfederanordnung verrückbar sein, und zwar in gleicher Axialrichtung oder in entgegengesetzte Axialrichtungen, um die betreffende Kupplungsanordnung im Einrücksinne (im Falle einer Kupplung des NORMALERWEISE-OFFEN-Typs) oder Ausrücksinne (im Falle einer Kupplungsanordnung des NORMALERWEISE-GESCHLOSSEN-Typs) zu betätigen. Die Betätigungskolben können entgegen der Rückstellkraft der jeweiligen Rückstellfederanordnung axial aufeinander zu oder axial voneinander weg oder beide in Richtung zum Getriebe oder beide in Richtung zur Antriebseinheit verrückbar sein.

Eine besonders bevorzugte Ausführungsform zeichnet sich dadurch aus, dass die erste und die zweite Kupplungsanordnung unter Verwendung wenigstens eines Gleichteils aufgebaut sind, von dem wenigstens ein Exemplar der ersten Kupplungsanordnung zugehörig und wenigstens ein Exemplar der zweiten Kupplungsanordnung zugehörig ist.

Es kann beispielsweise wenigstens eines der folgenden Bauteile bzw. es kann wenigstens eine der folgenden Bauteilgruppen als Gleichteil bzw. Gleichteile ausgeführt und jeweils in Form wenigstens eines Exemplars der ersten Kupplungsanordnung zugehörig und in Form wenigstens eines Exemplars der zweiten Kupplungsanordnung zugehörig sein:
- die Außenlamellen des ersten und des zweiten Lamellenpakets,
- die Innenlamellen des ersten und des zweiten Lamellenpakets,
- der Betätigungskolben der ersten und der zweiten Kupplungsanordnung,
- der Außenlamellenträger der ersten und der zweiten Kupplungsanordnung,
- wenigstens eine der ersten und der zweiten Kupplungsanordnung zugeordnete Rückstellfeder,
- wenigstens ein der ersten und der zweiten Kupplungsanordnung zugeordnetes Wandungsteil, das eine Fliehkraftdruckausgleichskammer begrenzt,
- wenigstens eine dem Nehmerzylinder der ersten und dem Nehmerzylinder der zweiten Kupplungsanordnung zugeordnete Dichtung,
- wenigstens eine der Fliehkraftdruckausgleichskammer der ersten und der Fliehkraftdruckausgleichskammer der zweiten Kupplungsanordnung zugeordnete Dichtung.

Im Zusammenhang mit der Anordnung der Kupplungsanordnung bzw. deren Lamellenpakete stellt sich die Frage, wie im Falle von für ein Laufen unter Einwirkung eines Betriebsmediums, ggf. Kühlöls, vorgesehenen Kupplungsanordnungen (also beispielsweise im Falle von nasslaufenden Lamellen-Kupplungsanordnungen) diese hinreichend mit Betriebsmedium versorgt werden sollen. Betriebsmedium, also insbesondere Kühlöl, das das eine Lamellenpaket passiert hat, wird unter Fliehkrafteinwirkung nach radial außen geschleudert und kann dann ohne gesonderte Maßnahmen nicht mehr das andere Lamellenpaket erreichen. Es bietet sich an, für beide Kupplungsanordnungen jeweils eine eigene Betriebsmediumzufuhr vorzusehen, so dass beide Kupplungsanordnungen hinreichend mit Betriebsmedium versorgt, insbesondere gekühlt, werden können. Man wird in diesem Zusammenhang daran denken, für die beiden Kupplungsanordnungen jeweils einen gesonderten Betriebsmediumanschluss vorzusehen.

Demgegenüber wird weiterbildend vorgeschlagen, dass die Kupplungseinrichtung wenigstens einen Betriebsmediumanschluss aufweist, über den wenigstens einer der beiden Kupplungsanordnungen Betriebsmedium zuführbar ist, und dass die Kupplungseinrichtung eine Flusseinstelleinrichtung aufweist oder der Kupplungseinrichtung eine gesonderte Flusseinstelleinrichtung zugeordnet ist, vermittels der wenigstens ein der ersten Kupplungsanordnung zugeführter Betriebsmediumstrom und wenigstens ein der zweiten Kupplungsanordnung zugeführter Betriebsmediumstrom unabhängig voneinander oder gegenläufig zueinander hinsichtlich des pro Zeiteinheit zugeführten Betriebsmediumvolumens einstellbar sind.

Es wird insbesondere vorgeschlagen, dass die Betriebsmediumströme in Abhängigkeit vom Betätigungszustand der jeweiligen Kupplungsanordnung einstellbar sind, wobei insbesondere an eine selbsttätige Einstellung der Betriebsmediumströme in Abhängigkeit vom jeweiligen Betätigungszustand gedacht wird.

Gegenüber einer Ausbildung der Kupplungseinrichtung mit wenigstens zwei Betriebsmediumanschlüssen, von denen wenigstens einer der einen Kupplungseinrichtung und wenigstens einer der anderen Kupplungseinrichtung zugeordnet ist und über die jeweils nur einer der Kupplungsanordnungen Betriebsmedium zuführbar ist, ist es bevorzugt, dass die Kupplungseinrichtung einen Betriebsmediumanschluss oder mehrere Betriebsmediumanschlüsse aufweist, über den (jeweils) beiden Kupplungsanordnungen Betriebsmedium zuführbar ist, und dass die Fußstelleinrichtung in die Kupplungseinrichtung integriert ist und im Bereich des wenigstens einen Betriebsmediumanschlusses oder stromabwärts desselben angeordnet ist. Bevorzugt ist die Ausbildung der Kupplungseinrichtung mit genau einem Betriebsmediumanschluss, so dass nur eine Betriebsmediumzuführung beispielsweise getriebeseitig vorgesehen werden muss. Nach dem Vorschlag erfolgt die Aufspaltung des zugeführten Betriebsmediumstroms auf die Kupplungsanordnungen bzw. die Zuordnung des zugeführten Betriebsmediumstroms zu einer bestimmten der Kupplungsanordnungen erst im Bereich des Betriebsmediumanschlusses bzw. stromabwärts desselben.

Betreffend die Einstellung der Betriebsmediumströme kann vorteilhaft vorgesehen sein, dass die Flusseinstelleinrichtung bei Betätigung der jeweiligen Kupplungseinrichtung im Einrücksinne im Sinne einer Vergrößerung des dieser Kupplungsanordnung zugeführten Betriebsmediumsstroms sowie ggf. im Sinne einer Verkleinerung des der anderen Kupplungsanordnung zugeführten Betriebsmediumsstroms wirkt, und dass die Flusseinstelleinrichtung bei Betätigung der jeweiligen Kupplungseinrichtung im Ausrücksinne im Sinne einer Verkleinerung des dieser Kupplungsanordnung zugeführten Betriebsmediumsstroms sowie ggf. im Sinne einer Vergrößerung des der anderen Kupplungsanordnung zugeführten Betriebsmediumsstroms wirkt. Betreffend eine in die Kupplungseinrichtung integrierte Flusseinstelleinrichtung wird in diesem Zusammenhang insbesondere daran gedacht, dass die Flusseinstelleinrichtung wenigstens einen der ersten Kupplungsanordnung zugeordneten ersten Betriebsmediumdurchgang und wenigstens einen der zweiten Kupplungsanordnung zugeordneten zweiten Betriebsmediumdurchgang aufweist, deren wirksame Strömungsquerschnitte in Abhängigkeit von einer Axialposition eines/des der jeweiligen Kupplungsanordnung zugeordneten, auf hydraulischem Wege entgegen der Wirkung einer Rückstellfederanordnung axial verrückbaren Betätigungskolbens verstellbar sind.

Eine vorteilhafte Ausgestaltung zeichnet sich dadurch aus, dass der jeweilige Betriebsmediumdurchgang wenigstens einen Betriebsmediumkanal in einem Bauteil der Kupplungseinrichtung aufweist, das eine Lauffläche für den jeweiligen Betätigungskolben aufweist, wobei wenigstens eine Mündungsöffnung des Betriebsmediumkanals zumindest teilweise in der Lauffläche liegt. Dabei kann ein auf der Lauffläche laufender Laufabschnitt des Betätigungskolbens eine der Mündungsöffnung zugeordnete Steuerkante oder/und eine Durchgangsöffnung oder Durchgangsaussparung aufweisen.

Die Erfindung betrifft ferner eine zugeordnete Betriebsmediumversorgung, an der die Kupplungseinrichtung angeschlossen oder anschließbar ist, um den für ein Laufen unter Einwirkung eines Betriebsmediums, ggf. Kühlöls, vorgesehenen Kupplungsanordnungen Betriebsmedium zuführen zu können. Nach dem angesprochenen zweiten Aspekt wird für dieses Kupplungssystem vorgeschlagen, dass wenigstens ein der ersten Kupplungsanordnung zugeführter Betriebsmediumstrom und wenigstens ein der zweiten Kupplungsanordnung zugeführter Betriebsmediumstrom unabhängig voneinander oder gegenläufig zueinander hinsichtlich des pro Zeiteinheit zugeführten Betriebsmediumvolumens einstellbar sind. Wie schon erwähnt, können die Betriebsmediumströme in Abhängigkeit vom Betätigungszustand der jeweiligen Kupplungsanordnung einstellbar sein.

Der Rotor kann vorteilhaft über eine Flexplattenanordnung der Abtriebswelle angekoppelt sein.

Der Rotor und eine Eingangsnabe der Eingangsseite können über eine Koppelanordnung in Drehmitnahmeverbindung stehen, die vorzugsweise als Torsionsschwingungsdämpferanordnung ausgeführt ist. Eine den Stator haltende Trägeranordnung kann vorteilhaft einen Nassraum für die Kupplungseinrichtung begrenzen.

Die Erfindung wird im Folgenden anhand von in den Figuren gezeigten Ausführungsbeispielen näher erläutert.

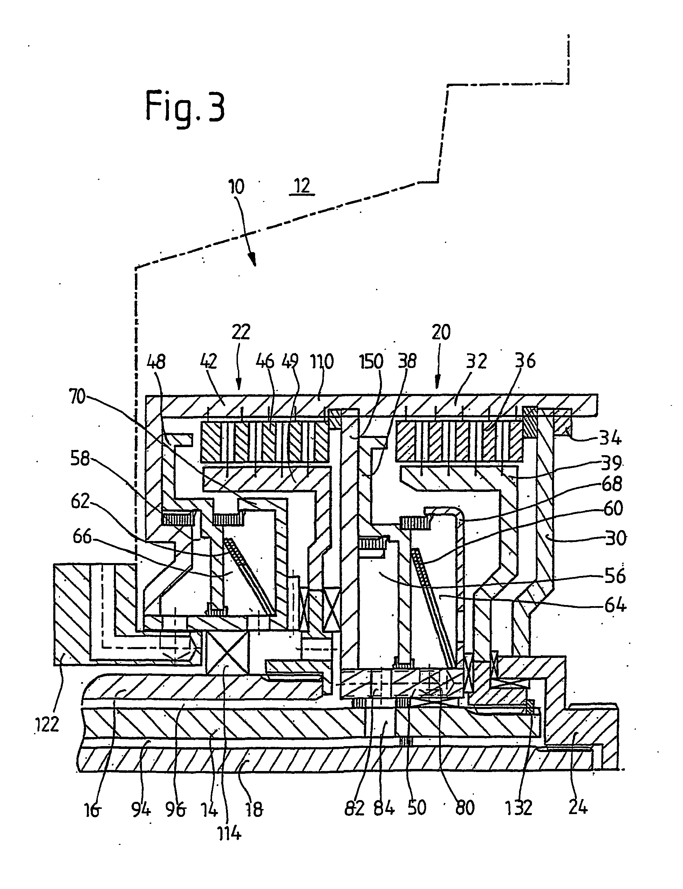

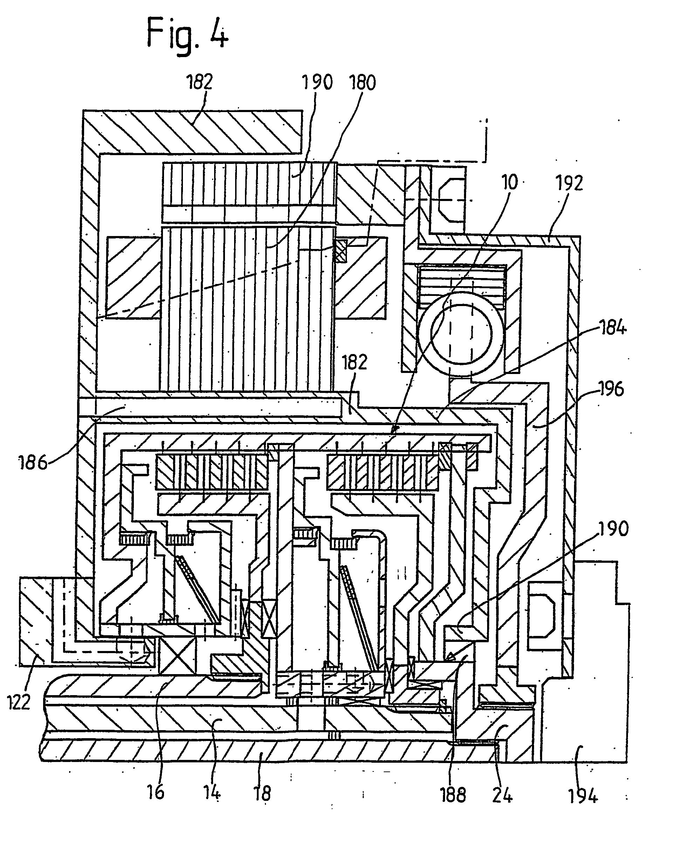

- Fig. 4: zeigt eine erfindungsgemäße Kombination aus einer Doppelkupplung mit axial nebeneinander angeordneten Lamellen-Kupplungsanordnungen und einem Kurbelwellenstartergenerator, der die im Wesentlichen dem Ausführungsbeispiel der Fig. 3 entsprechende Doppelkupplung radial außen umgibt.
- Fig. 1: zeigt ein erstes Ausführungsbeispiel einer in einem Antriebsstrang angeordneten Doppelkupplung mit zwei axial nebeneinander angeordneten Lamellen-Kupplungsanordnungen in einer geschnittenen Darstellung.
- Fig. 2: zeigt ein weiteres Ausführungsbeispiel einer derartigen Doppelkupplung.
- Fig. 3: zeigt noch ein weiteres Ausführungsbeispiel einer derartigen Doppelkupplung.

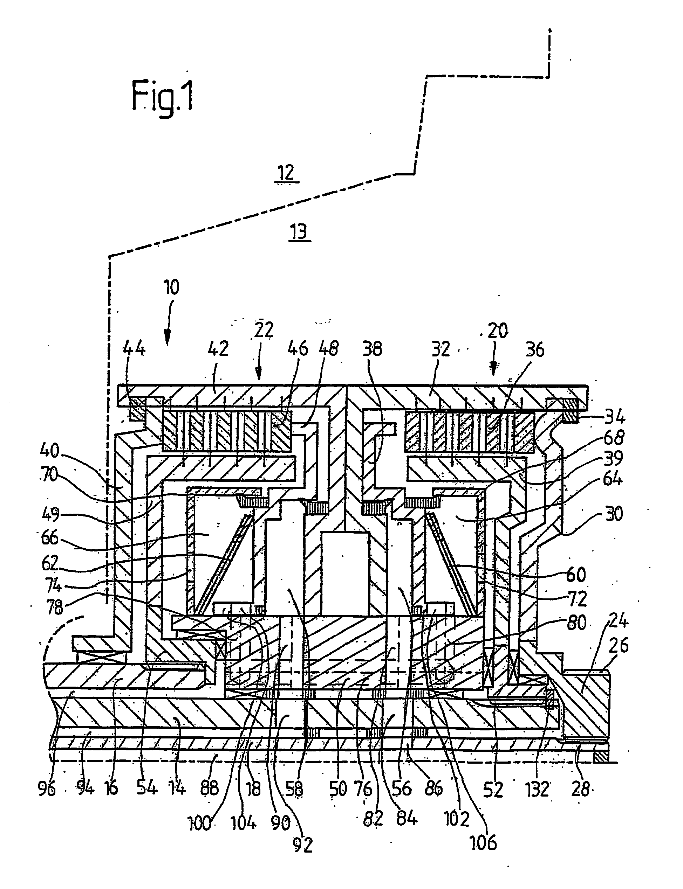

Fig. 1 zeigt in einer Schnittansicht eine in einem Antriebsstrang zwischen einem Getriebe und einer Antriebseinheit angeordnete Doppelkupplung 10, die in einem von einer Getriebegehäuseglocke 12 begrenzten Aufnahmeraum 13 aufgenommen ist. Von dem Getriebe sind als Hohlwellen ausgeführte Getriebeeingangswellen 14 und 16 zu erkennen, die radial geschachtelt angeordnet sind. Die innere Getriebeeingangswelle 14, die im Folgenden als erste Getriebeeingangswelle bezeichnet wird, erstreckt sich durch die radial äußere Getriebeeingangswelle 16, die im Folgenden als zweite Getriebeeingangswelle bezeichnet wird. Durch die erste Getriebeeingangswelle erstreckt sich ferner noch eine ebenfalls als Hohlwelle ausgeführte Pumpenantriebswelle 18.

Die Doppelkupplung 10 weist zwei axial nebeneinander angeordnete Kupplungsanordnungen 20 und 22 auf, von denen die rechte Kupplungsanordnung 20 (im Folgenden als erste Kupplungsanordnung bezeichnet) mit der ersten Getriebeeingangswelle 14 und die linke Kupplungsanordnung 22 (im Folgenden als zweite Kupplungsanordnung bezeichnet) mit der zweiten Getriebeeingangswelle 16 verbunden ist. Auf der ersten Getriebeeingangswelle sind beispielsweise die Gänge 1, 3, 5 und R (Rückwäürtsgang) einlegbar, und auf der zweiten Getriebeeingangswelle sind beispielsweise die Gänge 2, 4 und 6 einlegbar.

Von der Antriebseinheit her wird das Antriebsmoment, ggf. über eine Torsionsschwingungsdämpferanordnung (ggf. Zwei-Massen-Schwungrad) auf eine Eingangsnabe oder Eingangswelle 24 geleitet. Hierzu weist die Eingangsnabe radial außen Mitnahmeformationen, beispielsweise eine Steckverzahnung 26, auf. Die Pumpenantriebswelle 18 ist über radial innen liegende Mitnahmeformationen, beispielsweise eine Steckverzahnung 28, an der Eingangsnabe angekoppelt.

Das Drehmoment wird über einen scheibenartigen Mitnehmer 30 von der Eingangsnabe auf einen Außenlamellenträger 32 der ersten Kupplungsanordnung übertragen. Der Mitnehmer 30 greift hierzu in eine Innenverzahnung oder dergleichen des Außenlamellenträgers 32 ein und ist mittels eines Sicherungsrings 34 axial gesichert. Der Mitnehmer 30 dient zugleich als axiales Gegenlager für das Lamellenpaket 36 bei dessen Betätigung vermittels eines hydraulisch verrückbaren Betätigungskolbens 38.

Ein Außenlamellenträger 42 der zweiten Kupplungsanordnung (dieser Außenlamellenträger wird im Folgenden als zweiter Außenlamellenträger bezeichnet) ist mit dem (im Folgenden als erster Außenlamellenträger bezeichneten) Außenlamellenträger 32 der ersten Kupplungsanordnung drehfest verbunden, beispielsweise verschweißt. Beide Außenlamellenträger sind an einer Zentralnabe 50 angebracht, beispielsweise angeschweißt. Als Gegenlager für das Lamellenpaket 46 der zweiten Kupplungsanordnung bei dessen Betätigung mittels eines Betätigungskolbens 48 dient ein den Außenlamellenträger 42 an der zweiten Getriebeeingangswelle 16 radial abstützendes Abstützglied 40, das in die Innenverzahnung des Außenlamellenträgers 42 eingreift und an diesem axial mittels eines Sicherungsrings 44 gesichert ist.

Gemäß Vorstehendem ist die Eingangsnabe 24 mit beiden Außenlamellenträgem drehfest verbunden, so dass die Außenlamellenträger als Eingangsseite der betreffenden Kupplungsanordnung angesehen werden können. Die Kupplungsanordnungen weisen jeweils einen Innenlamellenträger 39 bzw. 49 auf. Die Innenlamellenträger sind jeweils mit einer Koppelnabe 52 bzw. 54 ausgeführt, die auf der jeweils zugeordneten Getriebeeingangswelle sitzt und über Mitnahmeformationen mit dieser zur gemeinsamen Drehung gekoppelt ist.

Der Außenlamellenträger 32 begrenzt zusammen mit dem Betätigungskolben 38 und der Zentralnabe 50 einen Druckraum 56 eines der ersten Kupplungsanordnung 20 zugehörigen hydraulischen Nehmerzylinders. In entsprechender Weise begrenzt der Außenlamellenträger 42 zusammen mit dem Betätigungskolben 48 und der Zentralnabe 50 einen Druckraum 58 eines der zweiten Kupplungsanordnung zugehörigen hydraulischen Nehmerzylinders. Auf die beiden Kolben wirkt jeweils eine Rückstellfederanordnung 60 bzw. 62, die vorliegend von einem jeweiligen Tellerfederpaar gebildet sind. Die Rückstellfederanordnungen sind in einen jeweiligen Fliehkraftdruckausgleichsraum 64 bzw. 66 aufgenommen, der zwischen dem jeweiligen Betätigungskolben 38 bzw. 48 und einer an der Zentralnabe 50 angeschweißten Wandung 68 bzw. 70 ausgebildet ist und im Betrieb mit Kühlöl gefüllt wird, um auf den jeweiligen Betätigungskolben wirkenden fliehkraftbedingten Druckerhöhungen in dem jeweiligen Druckraum 56 bzw. 58 entgegenzuwirken. Die Wandungen 68 und 70 weisen jeweils Öffnungen 72 und 74 auf, durch die das Kühlöl aus den Kammern 64 und 66 abfließen kann, um die Lamellenpakete 36 und 46 zu kühlen.

Das Kühlöl wird zwischen den beiden Getriebeeingangswellen 14 und 16 zugeführt und trifft dann in axial und radial verlaufende Kühlölkanäle in der Zentralnabe 50 ein. Ein axial verlaufender Kanal 76 und zwei hieraus in die Kammern 64 und 66 führende radial verlaufende Kanäle 78 und 80 sind in Fig. 1 angedeutet.

Die Druckkammer 56 ist über einen radial verlaufenden Kanal 82 in der Zentralnabe 50, eine Durchgangsöffnung 84 in der Hohlwelle 14, eine Durchgangsöffnung 86 in der Hohlwelle 18 und einen in der Hohlwelle 18 verlaufenden Kanal 88 an der zugeordneten Hydraulikdruckquelle angeschlossen. Die Druckkammer 58 ist über einen radial verlaufenden Kanal 90 in der Zentralnabe 50, eine Durchgangsöffnung 92 in der Hohlwelle 14 und einen Ringkanal 94 zwischen der Getriebeeingangswelle 14 und der Pumpenantriebswelle 18 an der zugeordneten Hydraulikdruckquelle angeschlossen. Die genannten Durchgangsöffnungen und Kanäle in den Wellen bzw. der Zentralnabe sind vorliegend von Bohrungen gebildet.

Zur Versorgung der Lamellenpakete 36 und 46 mit Kühlöl ist noch Folgendes auszuführen. Kühlöl, das das Lamellenpaket 46 erreicht hat, verlässt dieses im Betrieb unter Fliehkraftwirkung nach radial außen und kann dementsprechend zur Kühlung des Lamellenpakets 36 nichts mehr beitragen. Gleiches gilt für dem Lamellenpaket 36 zugeführtes Kühlöl betreffend die Kühlung des Lamellenpakets 46. Da beim gezeigten Ausführungsbeispiel nur eine gemeinsame Kühlölzuführung für beide Lamellenpakete durch einen Ringkanal 96 zwischen den beiden Getriebeeingangswellen erfolgt, ist in die Kupplungseinrichtung eine Flusssteuereinrichtung integriert, die die aus der Zentralnabe 50 abfließenden Kühlölströme so steuert, dass von den beiden Kupplungsanordnungen diejenige mit einer größeren Menge an Kühlöl versorgt wird, die momentan besonders belastet wird, nämlich momentan geschlossen ist. Die Kühlölströme sind unmittelbar abhängig von den Betätigungszuständen der beiden Kupplungsanordnungen, nämlich von den Axialpositionen der beiden Betätigungskolben 38 und 48. Die radial verlaufenden Kanäle 78 und 80 münden nämlich in der Lauffläche des jeweiligen Kolbens und sind durch einen Laufabschnitt 100 bzw. 102 des betreffenden Kolbens nach radial außen verschlossen, soweit nicht eine Durchgangsöffnung 104 bzw. 106 im jeweiligen Laufabschnitt die Mündungsöffnung überdeckt und Kühlöl in die jeweilige Fliehkraftdruckausgleichskammer 64 bzw. 66 durchlässt.

Gemäß Fig. 1 ist die erste Lamellen-Kupplungsanordnung 20 geöffnet (der Betätigungskolben 38 befindet sich in seiner Ruheposition ganz links) und ist die zweite Lamellen-Kupplungsanordnung 22 geschlossen (der Betätigungskolben 48 ist aus einer Ruheposition ganz links gegen das Lamellenpaket 46 gerückt). Wie aus der Figur betreffend die Kupplungsanordnung 20 zu ersehen, ist die Öffnung 106 im Laufabschnitt 102 gegenüber der Bohrung 80 in der Zentralnabe axial versetzt, so dass der aus der Bohrung 80 nach radial außen fließende Kühlölstrom gedrosselt wird. Ist die Kupplungsanordnung hingegen geschlossen (vgl. die Situation für die zweite Kupplungsanordnung 22), so kommt es zu einer maximalen Überdeckung zwischen der Öffnung (siehe Öffnung 104) im Laufabschnitt und der zugeordneten radialen Bohrung in der Zentralnabe, so dass der aus der Bohrung hervortretende Kühlölstrom maximal ist bzw. wird.

Die Doppelkupplung 10 ist unter Vermittlung der Zentralnabe 50 über zwei Radiallager zwischen der Zentralnabe 50 und der inneren Getriebeeingangsstelle 14 radial gelagert. Axial stützt sich die Doppelkupplung über ein Axiallager zwischen dem Innenlamellenträger 49 an der äußeren Getriebeeingangswelle 16 in Richtung zum Getriebe ab. In Richtung zur Antriebseinheit ist die Doppelkupplung über einen Sicherungsring 132 an der Getriebeeingangswelle 14 gesichert, der die Koppelnabe 52 des Innenlamellenträgers 39 in dieser Richtung axial abstützt.

Der Drehmomentenfluss von der Antriebseinheit zum Getriebe verläuft wie folgt: Das Drehmoment wird von der Abtriebswelle (ggf. Kurbelwelle) der Antriebseinheit über die Verzahnung 26 in die Eingangsnabe 24 und damit auf den Mitnehmer 30 übertragen, wobei vorzugsweise ein Torsionsschwingungsdämpfer oder Zwei-Massenschwungrad zwischen die Antriebseinheit und die Doppelkupplung geschaltet ist. Vom Außenlamellenträger 32 der Kupplungsanordnung 20 gelangt das Drehmoment über das Lamellenpaket 36 und den Innenlamellenträger 39, in Abhängigkeit vom Betätigungszustand der Kupplungsanordnung, auf die innere Getriebeeingangswelle 14. Ferner gelangt das Drehmoment vom Außenmlamellenträger 42 der Kupplungsanordnung 22 über das Lamellenpaket 46 und den Innenlamellenträger 49 auf die radial äußere Getriebeeingangswelle 16, wieder in Abhängigkeit vom Betätigungszustand der betreffenden Kupplungsanordnung.

Die Montage der Doppelkupplung kann beispielsweise wie folgt erfolgen. Zuerst wird der Außenlamellenträger 32 mit der Zentralnabe 50 verbunden, beispielsweise durch Schweißen. Es werden dann der Kolben 38 und die Rückstellfeder 60 eingelegt und die Wandung 68 des Ausgleichsraums 64 an der Zentralnabe 50 angeschweißt. Es kann dann der Innenlamellenträger 39 eingelegt werden, worauf dann die Außen- und Innenlamellen und der Mitnehmer eingelegt und letzterer durch den Sicherungsring 34 gesichert werden kann. Die Kupplungsanordnung 22 kann auf analoge Weise aufgebaut werden, vorzugsweise in einem Zuge mit dem Aufbau der Kupplungsanordnung 20 oder hieran anschließend.

Bei der Montage am Getriebe wird zuerst die Doppelkupplung 10 als Baueinheit eingebaut. Zur Montage des die Doppelkupplung in Richtung zur Antriebseinheit abstützenden Sicherungsrings 132 an der Getriebeeingangswelle 14 wird dann die Eingangsnabe 24 samt dem daran angebrachten Mitnehmer 30 wieder demontiert. Auf den Montagesicherungring wird dann die Eingangsnabe 24 mit dem Mitnehmer wieder eingebaut und durch den Sicherungsring gesichert. Als letzter Schritt wird dann noch eine ggf. deckelartige Trennwandung in der Gehäuseglocke montiert, die einen die Doppelkupplung enthaltenden Nassraum von einem Trockenraum trennt.

Ein besonderer Vorteil der Kupplungskonstruktion gemäß Fig. 1 ist, dass für den Aufbau der beiden Kupplungsanordnungen viele Gleichteile verwendbar sind, etwa gleiche Lamellen, gleiche Kolben, gleiche Wandungsteile, gleiche Rückstellfedern, gleiche Dichtungen und gleiche Außenlamellenträger.

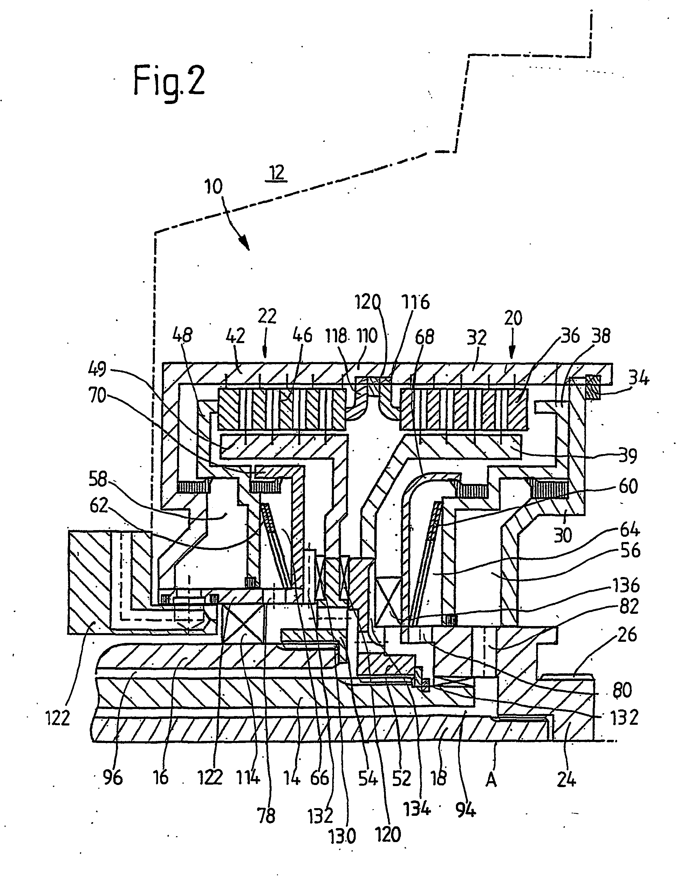

Fig. 2 zeigt ein weiteres Ausführungsbeispiel mit axial nebeneinander angeordneten Lamellen-Kupplungsanordnungen. Die rechte (erste) Kupplungsanordnung 20 ist wiederum mit der radial inneren (ersten) Getriebeeingangswelle 14 verbunden (auf dieser sind beispielsweise die Gänge 1, 3, 5 und R einlegbar), und die linke (zweite) Kupplungsanordnung 22 ist wiederum mit der radial äußeren (zweiten) Getriebeeingangswelle 16 verbunden (auf der beispielsweise die Gänge 2, 4 und 6 einlegbar sind).

Ein deutlicher Unterschied gegenüber dem Ausführungsbeispiel der Fig. 1 ist, dass beiden Kupplungsanordnungen ein gemeinsamer Außen-Lamellenträger 110 zugehörig ist, der einen Lamellentragabschnitt 32 für die erste Kupplungsanordnung und einen Lamellentragabschnitt 42 für die zweite Lamellenkupplungsanordnung aufweist. Der Außenlamellenträger ist über einen Mitnehmer 30 an der Eingangsnabe 24 angekoppelt und an einer Lagerhülse 112 fest angebracht, beispielsweise angeschweißt, über die der Außenlamellenträger unter Vermittlung eines Radiallagers 114 an der äußeren Getriebeeingangswelle 16 drehbar gelagert ist. Verschiedene Funktionen der Zentralnabe 50 des ersten Ausführungsbeispiels werden beim zweiten Ausführungsbeispiel von der Lagerhülse 112 und der Eingangsnabe 24 mitübemommen, wie sich aus dem Folgenden noch näher ergibt.

Die Druckkammer 56 des hydraulischen Nehmerzylinders der ersten Kupplungsanordnung ist vorliegend zwischen dem Mitnehmer 30 und dem an der Eingangsnabe 24 verschiebbar geführten Betätigungskolben 38 ausgebildet. An der Eingangsnabe ist eine Wandung 68 angeschweißt, um die Fliehkraftdruckausgleichskammer 64 zu bilden, in der die Rückstellfedern 60 aufgenommen sind. Die Druckkammer 58 des hydraulischen Nehmerzylinders der zweiten Kupplungsanordnung 22 ist zwischen einem sich radial erstreckenden Abschnitt des Außenlamellenträgers 110 und dem an der Lagerhülse 112 geführten Betätigungskolben 48 ausgebildet. Die beiden Lamellenpakete 36 und 46 stützen sich im Betätigungsfall an einem jeweiligen Anschlagring 116 bzw. 118 ab. Die beiden Anschlagringe sind in den Außenlamellenträger 110 eingelegt und durch einen Sicherungsring 120 axial gesichert. An der Lagerhülse 112 ist eine Wandung 70 angeschweißt, um den Fliehkraftdruckausgleichsraum 66 zu bilden, der die Rückstellfedern 62 aufnimmt.

Wie aus der Figur zu entnehmen, wirken die Betätigungskolben 38 und 48 zur Betätigung der jeweiligen Kupplungsanordnung in entgegengesetzte Axialrichtungen, nämlich hin zu einer zur Drehachse A orthogonalen Mittelebene der Doppelkupplung. Die beiden Innenlamellenträger 39 und 49, die mittels einer jeweiligen Koppelnabe 42 bzw. 54 auf der inneren Getriebeeinganswelle 14 bzw. äußeren Getriebeeingangswelle 16 drehfest angebracht sind, sind über ein Axiallager 120 aneinander abgestützt.

Die Druckkammer 56 ist über eine Bohrung 82 in der Eingangsnabe 24 an einem Ringkanal 94 zwischen der Getriebeeingangswelle 14 und der Pumpenantriebswelle 18 angeschlossen. Der Druckraum 58 ist über eine Drehdurchführung zwischen dem Getriebe und der Doppelkupplung an der zugeordneten Hydraulikdruckquelle angeschlossen. Die Drehdurchführung ist vorliegend von der als Drehdurchführungsrotor dienenden Lagerhülse 112 und einem getriebeseitigen Drehdurchführungsstator 122 gebildet, die eine Hydraulikölflussverbindung in radialer Richtung vermitteln. Alternativ hierzu könnte die Zufuhr des Hydraulikdrucks zwischen der radial äußeren Getriebeeinganswelle 16 und der Lagerhülse 112 erfolgen, die hierzu ggf. axial länger (in Richtung zum Getriebe) auszuführen wäre. Das Radiallager 114 wäre dann als Radiallager- und Dichtungsanordnung auszuführen.

Gemäß einer ersten Ausführungsmöglichkeit wird das Kühlöl in einem Ringkanal 96 zwischen den beiden Getriebeeingangswellen in den Bereich der Koppelnaben 52, 54 zugeführt, tritt durch axiale Bohrungen in den Naben hindurch und dann durch radiale Bohrungen 80 bzw. 78 in der Eingangsnabe 24 bzw. in der Lagerhülse 112 in die jeweilige Fliehkraftdruckausgleichskammer 64 bzw. 66. Es kann vorgesehen sein, dass parallel hierzu das Kühlöl durch Öffnungen 132 zwischen der Wandung 70 und einem den Innenlamellenträger 49 axial an der Wandung abstützenden Axiallager 130 oder Hinterschneidungen 134 in der Koppelnabe 52 zur Umgehung eines zwischen dieser Koppelnabe und der Wandung 68 angeordneten Axiallagers 136 hindurchtreten kann und so zu den Lamellenpaketen gelangen kann (durch entsprechende Öffnungen in den Innenlamellenträgern). Nach einer anderen Gestaltungsmöglichkeit kann der jeweilige Kühlölstrom zuerst den Druckausgleichsraum 66 bzw. 64 füllen und dann durch Öffnungen in der Wandung 70 bzw. 68 hindurchtreten, um dann zu den Lamellenpaketen zu gelangen. In diesem Fall kann man vorsehen, dass die in die Ausgleichskammem eintretenden Kühlölströme von dem Betätigungszustand der jeweiligen Kupplungsanordnung abhängen, beispielsweise auf die im Zusammenhang mit dem ersten Ausführungsbeispiel erläuterte Art und Weise. Eine entsprechende Abwandlung des Ausführungsbeispiels der Figur 2 ist für den Fachmann auf Grundlage der oben gegebenen Informationen ohne Weiteres möglich. Es sei darauf hingewiesen, dass die Fig. 2 die erste Kupplungsanordnung 20 im offenen und die zweite Kupplungsanordnung 22 im geschlossenen Zustand zeigt.

Betreffend die Lagerung der Doppelkupplung seien noch folgende zusammenfassenden Informationen gegeben. Die radiale Lagerung der Doppelkupplung erfolgt über das Radiallager 114 zwischen der Lagerhülse 112 und der äußeren Getriebeeingangswelle 16 sowie über eine Radial- oder Radial-Axial-LagerAnordnung zwischen der Eingangsnabe 24 und der inneren Getriebeeingangswelle 14. Axial stützt sich die Doppelkupplung in Richtung zum Getriebe über das Axiallager 120 zwischen den beiden Innenlamellenträgem vermittels der Koppelnabe 54 an der äußeren Getriebeeingangswelle 16 ab. In Richtung zur Antriebseinheit (Verbrennungsmotor) ist die Doppelkupplung über einen Sicherungsring 132 auf der inneren Getriebeeingangswelle 14 gesichert, an dem die Koppelnabe 52 unter Vermittlung eines Distanzrings anliegt.

Das Antriebs-Drehmoment wird von der Abtriebswelle der Antriebseinheit (in der Regel Kurbelwelle) beispielsweise über einen Torsionsschwingungsdämpfer oder ein Zwei-Massenschwungrad vermittels der Verzahnung 26 auf die Eingangsnabe 24 übertragen. Über den Mitnehmer 30, den Außenlamellenträger 110, das Lamellenpaket 36 bzw. das Lamellenpaket 46, den Innenlamellenträger 39 bzw. den Innenlamellenträger 49 werden dann in Abhängigkeit von den Betätigungszuständen der beiden Kupplungsanordnungen die beiden Getriebeeingangswellen angetrieben. Die Montage der Doppelkupplung kann vorteilhaft wie folgt erfolgen. Zuerst wir der Außenlamellenträger 110 mit der Lagerhülse 112 verbunden, beispielsweise durch Schweißen. Es werden dann der Kolben 48 und die Rückstellfedern 62 eingelegt und dann die Wandung 70 an der Lagerhülse 112 angeschweißt. Es können dann der Innenlamellenträger 49 sowie die Außen- und Innenlamellen der zweiten Kupplungsanordnung 22 eingelegt werden. Nach Einlegen des Anschlagrings 118 und Sicherung desselben durch den Sicherungsring 120 können dann der Anschlagring 116 für die erste Kupplungsanordnung und der Innenlamellenträger 39 eingelegt werden. Hierauf werden die Außen- und Innenlamellen der ersten Kupplungsanordnung eingelegt. Anschließend kann ein Zusammenbau bestehend aus der Eingangsnabe 24, dem darauf aufgeschweißten Mitnehmer 30, dem Betätigungskolben 38, den Rückstellfedern und der an der Eingangsnabe 24 angeschweißten Wandung 68 eingelegt und mit dem Sicherungsring 34 am Außenlamellenträger 110 gesichert werden.

Bei der Montage der Doppelkupplung am Getriebe wird die Doppelkupplung als Einbaueinheit zuerst eingebaut. Anschließend muss der Zusammenbau umfassend die Eingangsnabe wieder ausgebaut werden, um den Sicherungsring 132 zu montieren. Anschließend wird der Zusammenbau wieder eingebaut und mit dem Sicherungsring 34 gesichert. Um einen die Doppelkupplung aufnehmenden Nassraum von einem Trockenraum zu trennen, wird noch eine ggf. deckelartige Trennwandung in die Gehäuseglocke eingebaut, wie dies an sich schon bekannt ist.

Auch das Ausführungsbeispiel der Figur 3 weist, wie das Ausführungsbeispiel der Figur 2, einen beiden Kupplungsanordnungen gemeinsam zugeordneten Außenlamellenträger 110 auf mit einem Lamellentragabschnitt 32 für die erste Kupplungsanordnung 20 und einem Lamellentragabschnitt 42 für die zweite Kupplungsanordnung 22. Die Ausgestaltung der zweiten Kupplungsanordnung 22 hinsichtlich den die Kupplungsanordnung bildenden Komponenten, deren Anordnung und Anschluss des Druckraums 58 an der zugeordneten Hydraulikdruckquelle und Zufuhr von Kühlöl ist sehr ähnlich oder sogar identisch zu der Ausgestaltung der zweiten Kupplungsanordnung 22 gemäß Figur 2, so dass auf die diebezüglichen Ausführungen oben verwiesen werden kann. Die erste Kupplungsanordnung 20 ist mit einer Zentralnabe oder Hülse 50 ausgeführt, die über ein daran angebrachtes, beispielsweise angeschweißtes Koppelglied 150 mit dem Außenlamellenträger 110 zur gemeinsamen Drehung verbunden ist. Das Koppelglied 150 bildet mit der Hülse 50 und dem Betätigungskolben 38 den Druckraum 56 des hydraulischen Nehmerzylinders der ersten Kupplungsanordnung 20. An der Hülse 50 ist ferner eine Wandung 68 angeschweißt, um den die Rückstellfedern 60 aufnehmenden Fliehkraftdruckausgleichsraum 64 zu bilden. Die Druckkammer 56 ist über wenigstens eine Bohrung 82 in der Hülse 50 und wenigstens eine Bohrung 84 in der radial inneren Eingangswelle 14 an dem Ringkanal 94 zwischen der inneren Getriebeeingangswelle 14 und der Pumpenantriebswelle 18 angeschlossen. Das Kühlöl tritt aus dem Kanal 96 durch axiale Bohrungen oder Kanäle der Hülse 50 und einen radialen Auslass 80 in die Fliehkraftdruckausgleichskammer 64 ein. Wie beim Ausführungsbeispiel der Figur 1 kann man eine Steuerung der den Lamellenpaketen zugeführten Kühlölströme vorsehen, beispielsweise auf die im Zusammenhang mit der Fig. 1 erläuterte Art und Weise. Entsprechende Modifikationen der Konstruktion gemäß Fig. 3 sind dem Fachmann auf Grundlage der oben gegebenen Infromationen ohne weiteres möglich.

Der Momentenfluss von der Eingangsnabe 24 zu den Getriebeeingangswellen erfolgt über den Außenlamellenträger 110, das Lamellenpaket 36 bzw. 46 (je nach Betätigungszustand der betreffenden Kupplungsanordnung), den Innenlamellenträger 39 bzw. 49 auf die jeweils zugeordnete Getriebeeingangswelle 14 bzw. 16. Die Montage der Doppelkupplung zu einer Baueinheit und der Einbau derselben an einem Getriebe bzw. in einer Getriebeglocke, erfolgt beispielsweise auf analoge Weise wie oben im Bezug auf die Ausführungsbeispiele der Figuren 1 und 2 ausgeführt. Die radiale und axiale Abstützung der Doppelkupplung erfolgt über die in der Figur gezeigten Radiallager und Axiallager. In Richtung zum Getriebe ist eine Abstützung über den Sicherungsring 132 vorgesehen, so dass nach Einbau der Doppelkupplungsbaueinheit die Eingangsnabe 24 mit dem Mitnehmer 30 wieder demontiert und nach Montage des Sicherungsrings 132 wieder montiert werden muss.

Eine Kombination, zur Integration einer Doppelkupplung mit zwei axial nebeneinander angeordneten Lamellen-Kupplungsanordnungen innerhalb eines Kurbelwellenstartergenerators, allgemein einer Elektromaschine, mit einem Rotor und einem Stator, ist in Figur 4 gezeigt. Die Doppelkupplung 10 entspricht im Wesentlichen dem Ausführungsbeispiel der Fig. 3, so dass auf die vorstehenden Ausführungen zur Fig. 3 verwiesen werden kann. Ein Stator 180 des Kurbelwellenstatorgenerators ist auf einer Trägeranordnung 182 gehalten, die zwischen dem Getriebegehäuse und dem Gehäuse der Antriebseinheit angeordnet und am Getriebegehäuse montiert ist. Ein den Stator 180 unmittelbar haltender Trägerabschnitt 184 der Trägeranordnung ist mit Kühlkanälen 186 ausgeführt und im Axialbereich zwischen der Antriebseinheit und der Doppelkupplung 10 nach radial innen geführt zu einer Dichtungs- und Radiallageranordnung 188, die zwischen der Eingangsnabe 24 und einem axial sich erstreckenden Bund 190 des Trägerabschnittes 184 wirksam ist. Der Trägerabschnitt 184, der die Doppelkupplung 10 ringartig umgibt, begrenzt auf diese Weise einen die Doppelkupplung 10 enthaltenden Nassraum. Die Trägeranordnung 182 kann auch als "Zwischenflansch" bezeichnet werden. Eine andere Möglichkeit wäre, die Trägeranordnung 182 zumindest teilweise integral oder einteilig mit dem Getriebegehäuse auszubilden.

Der Rotor 190 ist über eine Flexplattenanordnung 192 an der Abtriebswelle 194 der Antriebseinheit angebunden. Das Antriebsmoment von der Antriebseinheit wird über die Flexplatte und eine damit gekoppelte Momentenübertragungsanordnung 196 zur Eingangsnabe 24 übertragen. Die Momentenübertragungsanordnung ist vorliegend als Torsionsschwingungsdämpferanordnung ausgeführt.

Beim in Fig. 4 gezeigten Ausführungsbeispiel handelt es sich um einen Kurbelwellenstartergenerator vom Außenläufertyp, bei dem der Rotor den Stator radial außen umgibt. Der Kurbelwellenstartergenerator könnte ohne Weiteres auch als Innenläufermaschine ausgeführt sein.

Wie in Fig. 4 durch eine gestrichelte Linie angedeutet, wird beim Ausführungsbeispiel der Fig. 4 von etwas anderen Abmessungen der Getriebegehäuseglocke 12 ausgegangen als bei den Fig. 1 bis 3. Es erscheint aber durchaus technisch machbar, eine Kombination aus einer Elektromaschine und einer Doppelkupplung mit axial nebeneinander angeordneten Kupplungsanordnungen radial noch kompakter als in Fig. 4 auszuführen und in der in Fig. 4 gestrichelt angedeuteten Getriebegehäuseglocke unterzubringen. Beispielsweise könnte man einen Kurbelwellenstartergenerator vorsehen, bei dem der Rotor und der Stator axial nebeneinander angeordnet sind, so dass radialer Bauraum gespart wird.

## Patentansprüche

1. Kombination aus einer Mehrfach-Kupplungseinrichtung, ggf. Doppel-Kupplungseinrichtung (10) und einer Elektromaschine, ggf. einer Kurbelwellenstarteranordnung (180, 190), für die Anordnung in einem Antriebsstrang zwischen einer Antriebseinheit und einem Getriebe, wobei die Kupplungseinrichtung eine einer ersten Getriebeeingangswelle (14) des Getriebes zugeordnete erste Lamellen-Kupplungsanordnung (20) und eine einer zweiten Getriebeeingangswelle (16) des Getriebes zugeordnete zweite Lamellen-Kupplungsanordnung (22) aufweist zur Momentenübertragung zwischen der Antriebseinheit und dem Getriebe,
wobei von den Getriebeeingangswellen wenigstens eine (14, 16) als Hohlwelle ausgebildet ist und eine (14) der Getriebeeingangswellen durch eine andere, als Hohlwelle ausgebildete Getriebeeingangswelle (16) verläuft,
wobei die Kupplungseinrichtung (10) eine an einer Abtriebswelle der Antriebseinheit direkt oder indirekt angekoppelte oder ankoppelbare Eingangsseite (24) aufweist, die mit eingangsseitigen Lamellen eines ersten Lamellenpakets (36) der ersten Kupplungsanordnung (20) und eingangsseitigen Lamellen eines zweiten Lamellenpakets (46) der zweiten Kupplungsanordnung in Drehmitnahmeverbindung steht oder bringbar ist,
wobei ein ausgangsseitiger Lamellenträger (32; 110) der ersten Kupplungsanordnung mit der ersten Getriebeeingangswelle (14) im Sinne einer Drehmitnahme gekoppelt oder koppelbar ist und ein ausgangsseitiger Lamellenträger (42; 110) der zweiten Kupplungsanordnung (22) mit der zweiten Getriebeeingangswelle (16) im Sinne einer Drehmitnahme gekoppelt oder koppelbar ist, **dadurch gekennzeichnet,**
**dass** das erste Lamellenpaket (36) und das zweite Lamellenpaket (46) bezogen auf eine gemeinsame Drehachse (A) axial nebeneinander angeordnet sind, und wobei die Elektromaschine einen mit der Abtriebswelle in Drehmitnahmeverbindung stehenden oder bringbaren Rotor (190) und einen unter Vermittlung eines Gehäuses des Getriebes oder/und eines Gehäuses der Antriebseinheit abgestützten Stator (180) aufweist, wobei der Rotor und der Stator die Kupplungseinrichtung (10) ringartig radial außen umgeben.

2. Kombination nach Anspruch 1,
**dadurch gekennzeichnet, dass** das erste (36) und das zweite (46) Lamellenpaket etwa im gleichen Radialbereich bezogen auf die Drehachse (A) angeordnet sind und vorzugsweise im Wesentlichen gleiche Innen- und Außendurchmesser aufweisen.

3. Kombination nach Anspruch 1 oder 2,
**dadurch gekennzeichnet, dass** die Kupplungsanordnungen einen gemeinsamen, eingangsseitig angeordneten Außenlamellenträger (110) aufweisen oder dass ein der ersten Kupplungsanordnung zugehöriger erster Außenlamellenträger (32) und ein der zweiten Kupplungsanordnung zugehöriger zweiter Außenlamellenträger (42), die eingangsseitig angeordnet sind, drehfest miteinander verbunden, gegebenfalls miteinander verschweißt sind.

4. Kombination nach einem der Ansprüche 1 bis 3,
**dadurch gekennzeichnet, dass** die Kupplungsanordnungen vermittels eines jeweiligen, in die Kupplungseinrichtung integrierten hydraulischen Nehmerzylinders betätigbar sind, wobei ein der ersten Kupplungsanordnung zugehöriger Betätigungskolben (38) und ein der zweiten Kupplungsanordnung zugehöriger Betätigungskolben (48) vermittels des jeweiligen Nehmerzylinders entgegen der Rückstellkraft einer jeweiligen Rückstellfederanordnung (60, 62) in gleicher Axialrichtung oder in entgegengesetzte Axialrichtungen verrückbar sind, um die betreffende Kupplungsanordnung im Einrücksinne oder Ausrücksinne zu betätigen.

5. Kombination nach Anspruch 4,
**dadurch gekennzeichnet, dass** die Betätigungskolben (38, 48) entgegen der Rückstellkraft der jeweiligen Rückstellfederanordnung axial aufeinander zu oder axial voneinander weg oder beide in Richtung zum Getriebe oder beide in Richtung zur Antriebseinheit verrückbar sind.

6. Kombination nach einem der Ansprüche 1 bis 5,
**dadurch gekennzeichnet, dass** die erste und die zweite Kupplungsanordnung unter Verwendung wenigstens eines Gleichteils aufgebaut sind, von dem wenigstens ein Exemplar der ersten Kupplungsanordnung (20) zugehörig und wenigstens ein Exemplar der zweiten Kupplungsanordnung (22) zugehörig ist.

7. Kombination nach Anspruch 6,
**dadurch gekennzeichnet, dass** wenigstens eines der folgenden Bauteile bzw. wenigstens eine der folgenden Bauteilgruppen als Gleichteil bzw. Gleichteile ausgeführt und jeweils in Form wenigstens eines Exemplars der ersten Kupplungsanordnung (20) zugehörig und in Form wenigstens eines Exemplars der zweiten Kupplungsanordnung (22) zugehörig ist/sind:
- die Außenlamellen des ersten (36) und des zweiten (46) Lamellenpakets,
- die Innenlamellen (36) des ersten und des zweiten (46) Lamellenpakets,
- der Betätigungskolben (38 bzw. 48) der ersten und der zweiten Kupplungsanordnung,
- der Außenlamellenträger (32 bzw. 42) der ersten und der zweiten Kupplungsanordnung,
- wenigstens eine der ersten und der zweiten Kupplungsanordnung zugeordnete Rückstellfeder (60 bzw. 62),
- wenigstens ein der ersten und der zweiten Kupplungsanordnung zugeordnetes Wandungsteil (68 bzw. 70), das eine Fliehkraftdruckausgleichskammer begrenzt,
- wenigstens eine dem Nehmerzylinder der ersten und dem Nehmerzylinder der zweiten Kupplungsanordnung zugeordnete Dichtung,
- wenigstens eine der Fliehkraftdruckausgleichskammer der ersten und der Fliehkraftdruckausgleichskammer der zweiten Kupplungsanordnung zugeordnete Dichtung.

8. Kombination nach einem der Ansprüche 1 bis 7,
**dadurch gekennzeichnet, dass** die Kupplungsanordnungen (20, 22) für ein Laufen unter Einwirkung eines Betriebsmediums, ggf. Kühlöls, vorgesehen sind, dass die Kupplungseinrichtung wenigstens einen Betriebsmediumanschluss aufweist, über den wenigstens einer der beiden Kupplungsanordnungen Betriebsmedium zuführbar ist, und dass die Kupplungseinrichtung eine Flusseinstelleinrichtung (78, 104, 80, 106) aufweist oder der Kupplungseinrichtung eine gesonderte Flusseinstelleinrichtung zugeordnet ist, vermittels der wenigstens ein der ersten Kupplungsanordnung (20) zugeführter Betriebsmediumstrom und wenigstens ein der zweiten Kupplungsanordnung (22) zugeführter Betriebsmediumstrom unabhängig voneinander oder gegenläufig zueinander hinsichtlich des pro Zeiteinheit zugeführten Betriebsmediumvolumens einstellbar sind.

9. Kombination nach Anspruch 8,
**dadurch gekennzeichnet, dass** die Betriebsmediumströme in Abhängigkeit vom Betätigungszustand der jeweiligen Kupplungsanordnung (20 bzw. 22) einstellbar sind.

10. Kombination nach einem der Ansprüche 8 oder 9,
**dadurch gekennzeichnet, dass** die Kupplungseinrichtung wenigstens einen Betriebsmediumanschluss (96) aufweist, über den (jeweils) beiden Kupplungsanordnungen Betriebsmedium zuführbar ist, und dass die Flusseinstelleinrichtung (78, 104, 80, 106) in die Kupplungseinrichtung (10) integriert ist und im Bereich des Betriebsmediumanschlusses oder stromabwärts desselben angeordnet ist.

11. Kombination nach einem der Ansprüche 8 bis 10,
**dadurch gekennzeichnet, dass** die Flusseinstelleinrichtung (78, 104, 80, 106) bei Betätigung der jeweiligen Kupplungseinrichtung im Einrücksinne im Sinne einer Vergrößerung des dieser Kupplungsanordnung zugeführten Betriebsmediumsstroms sowie ggf. im Sinne einer Verkleinerung des der anderen Kupplungsanordnung zugeführten Betriebsmediumsstroms wirkt, und dass die Flusseinstelleinrichtung bei Betätigung der jeweiligen Kupplungseinrichtung im Ausrücksinne im Sinne einer Verkleinerung des dieser Kupplungsanordnung zugeführten Betriebsmediumsstroms sowie ggf. im Sinne einer Vergrößerung des der anderen Kupplungsanordnung zugeführten Betriebsmediumsstroms wirkt.

12. Kombination nach Anspruch 10 und 11,
**dadurch gekennzeichnet, dass** die Flusseinstelleinrichtung wenigstens einen der ersten Kupplungsanordnung (20) zugeordneten ersten Betriebsmediumdurchgang (80, 106) und wenigstens einen der zweiten Kupplungsanordnung (22) zugeordneten zweiten Betriebsmediumdurchgang (78, 104) aufweist, deren wirksame Strömungsquerschnitte in Abhängigkeit von einer Axialposition eines/des der jeweiligen Kupplungsanordnung zugeordneten, auf hydraulischem Wege entgegen der Wirkung einer Rückstellfederanordnung axial verrückbaren Betätigungskolbens (38 bzw. 48) verstellbar sind.

13. Kombination nach Anspruch 12
**dadurch gekennzeichnet, dass** der jeweilige Betriebsmediumdurchgang wenigstens einen Betriebsmediumkanal (80 bzw. 78) in einem Bauteil (50) der Kupplungseinrichtung aufweist, das eine Lauffläche für den jeweiligen Betätigungskolben aufweist, wobei wenigstens eine Mündungsöffnung des Betriebsmediumkanals zumindest teilweise in der Lauffläche liegt.

14. Kombination nach Anspruch 13
**gekennzeichnet durch** eine der Mündungsöffnung zugeordnete Steuerkante oder/und eine Durchgangsöffnung (106 bzw. 104) oder Durchgangsaussparung in einem auf der Lauffläche laufenden Laufabschnitt (100 bzw. 102) des Betätigungskolbens (38 bzw. 48).

15. Kombination nach einem der vorhergehenden Ansprüche und eine zugeordnete Betriebsmediumversorgung, an der die Kupplungseinrichtung angeschlossen oder anschliessbar ist, um den für ein Laufen unter Einwirkung eines Betriebsmediums, ggf. Kühlöls, vorgesehenen Kupplungsanordnungen Betriebsmedium zuführen zu können,
**dadurch gekennzeichnet,**
**dass** wenigstens ein der ersten Kupplungsanordnung (20) zugeführter Betriebsmediumstrom und wenigstens ein der zweiten Kupplungsanordnung (22) zugeführter Betriebsmediumstrom unabhängig voneinander oder gegenläufig zueinander hinsichtlich des pro Zeiteinheit zugeführten Betriebsmediumvolumens einstellbar sind.

16. Kombination nach Anspruch 15
**dadurch gekennzeichnet, dass** die Betriebsmediumströme in Abhängigkeit vom Betätigungszustand der jeweiligen Kupplungsanordnung einstellbar sind.

17. Kombination nach Anspruch 16
**dadurch gekennzeichnet, dass** der Rotor (190) über eine Flexplattenanordnung (192) an der Abtriebswelle (194) angekoppelt ist.

18. Kombination nach Anspruch 16 oder 17,
**dadurch gekennzeichnet, dass** der Rotor (190) und eine Eingangsnabe (24) der Eingangsseite über eine Koppelanordnung (196) in Drehmitnahmeverbindung stehen, die vorzugsweise als Torsionsschwingungsdämpferanordnung (196) ausgeführt ist.

19. Kombination nach einem der Ansprüche 16 bis 18,
**dadurch gekennzeichnet, dass** eine den Stator (180) haltende Trägeranordnung (182) einen Nassraum für die Kupplungseinrichtung (10) begrenzt.

## Claims

1. Combination of a multiple clutch device, if appropriate dual clutch device (10), and an electric machine, if appropriate a crankshaft starter arrangement (180, 190), for arranging in a drivetrain between a drive unit and a transmission, with the clutch device having a first multiplate clutch arrangement (20), which is assigned to a first transmission input shaft (14) of the transmission, and a second multiplate clutch arrangement (22), which is assigned to a second transmission input shaft (16) of the transmission, for torque transmission between the drive unit and the transmission,
with at least one (14, 16) of the transmission input shafts being embodied as a hollow shaft, and one (14) of the transmission input shafts running through the other transmission input shaft (16) which is embodied as a hollow shaft,
with the clutch device (10) having an input side (24) which is or can be coupled directly or indirectly to a drive output shaft of the drive unit, which input side (24) is or can be placed in rotationally driving connection with input-side plates of a first plate pack (36) of the first clutch arrangement (20) and input-side plates of a second plate pack (46) of the second clutch arrangement,
with an output-side plate carrier (32; 110) of the first clutch arrangement being coupled or being capable of being coupled to the first transmission input shaft (14) for the purpose of rotational driving, and an output-side plate carrier (42; 110) of the second clutch arrangement (22) being coupled or being capable of being coupled to the second transmission input shaft (16) for the purpose of rotational driving,
**characterized in that**
the first plate pack (36) and the second plate pack (46) are arranged axially adjacent to one another with respect to a common rotational axis (A), and with the electric machine having a rotor (190), which is or can be placed in rotationally driving connection with the drive output shaft, and a stator (180) which is supported with the interposition of a housing of the transmission or/and a housing of the drive unit, with the rotor and the stator annularly surrounding the clutch device (10) radially at the outside.

2. Combination according to Claim 1, **characterized in that** the first (36) and the second (46) plate packs are arranged approximately in the same radial region with respect to the rotational axis (A), and preferably have substantially identical inner and outer diameters.

3. Combination according to Claim 1 or 2, **characterized in that** the clutch arrangements have a common outer plate carrier (110) which is arranged at the input side, or **characterized in that** a first plate carrier (32) which is assigned to the first clutch arrangement and a second plate carrier (42) which is assigned to the second clutch arrangement, which first plate carrier (32) and second plate carrier (42) are arranged at the input side, are rotationally fixedly connected to one another, if appropriate welded to one another.

4. Combination according to one of Claims 1 to 3, **characterized in that** the clutch arrangement can be actuated by means of a respective hydraulic slave cylinder which is integrated into the clutch device, with an actuating piston (38) which is assigned to the first clutch arrangement and an actuating piston (48) which is assigned to the second clutch arrangement being movable, by means of the respective slave cylinder, in the same axial direction or in opposite axial directions counter to the restoring force of a respective restoring spring arrangement (60, 62) in order to actuate the respective clutch arrangement for the purpose of engagement or disengagement.

5. Combination according to Claim 4, **characterized in that** the actuating pistons (38, 48) can be moved, counter to the restoring force of the respective restoring spring arrangement, axially towards one another or axially apart from one another or both in the direction of the transmission or both in the direction of the drive unit.

6. Combination according to one of Claims 1 to 5, **characterized in that** the first and the second clutch arrangements are constructed using at least one common part, at least one example of which is assigned to the first clutch arrangement (20) and at least one example of which is assigned to the second clutch arrangement (22).

7. Combination according to Claim 6, **characterized in that** at least one of the following components or at least one of the following component groups is/are embodied as a common part/as common parts, and in each case is/are, in the form of at least one example, assigned to the first clutch arrangement (20) and is/are, in the form of at least one example, assigned to the second clutch arrangement (22):
- the outer plates of the first (36) and of the second (46) plate pack,
- the inner plates of the first (36) and of the second (46) plate pack,
- the actuating pistons (38 and 48) of the first and of the second clutch arrangement,
- the outer plate carriers (32 and 42) of the first and of the second clutch arrangement,
- at least one restoring spring (60 and 62) which is assigned to the first and to the second clutch arrangement,
- at least one wall part (68 and 70) which is assigned to the first and to the second clutch arrangement, which wall part (68 and 70) delimits a centrifugal force pressure compensating chamber,
- at least one seal which is assigned to the slave cylinder of the first and to the slave cylinder of the second clutch arrangement,
- at least one seal which is assigned to the centrifugal force pressure compensating chamber of the first and to the centrifugal force pressure compensating chamber of the second clutch arrangement.

8. Combination according to one of Claims 1 to 7, **characterized in that** the clutch arrangements (20, 22) are provided for running under the action of an operating medium, for example cooling oil, **characterized in that** the clutch device has at least one operating medium connection, via which operating medium can be supplied to at least one of the two clutch arrangements, and **characterized in that** the clutch device has a flow adjusting device (78, 104, 80, 106), or the clutch device is assigned a separate flow adjusting device, by means of which at least one operating medium flow which is supplied to the first clutch arrangement (20) and at least one operating medium flow which is supplied to the second clutch arrangement (22) can be adjusted independently of one another or oppositely to one another with regard to the operating medium volume supplied per unit time.

9. Combination according to Claim 8, **characterized in that** the operating medium flows can be adjusted as a function of the actuating state of the respective clutch arrangement (20 and 22).

10. Combination according to one of Claims 8 or 9, **characterized in that** the clutch device has at least one operating medium connection (96), via which operating medium can be supplied (in each case) to the two clutch arrangements, and **characterized in that** the flow adjusting device (78, 104, 80, 106) is integrated into the clutch device (10) and is arranged in the region of the operating medium connection or downstream thereof.

11. Combination according to one of Claims 8 to 10, **characterized in that** the flow adjusting device (78, 104, 80, 104), when the respective clutch device is actuated for the purpose of an engagement, acts so as to increase the operating medium flow which is supplied to said clutch arrangement, and if appropriate, so as to decrease the operating medium flow which is supplied to the other clutch arrangement, and **characterized in that** the flow adjusting device, when the respective clutch device is actuated for the purpose of a disengagement, acts so as to decrease the operating medium flow which is supplied to said clutch arrangement, and if appropriate, so as to increase the operating medium flow which is supplied to the other clutch arrangement.

12. Combination according to Claim 10 and 11, **characterized in that** the flow adjusting device has at least one operating medium passage (80, 106) which is assigned to the first clutch arrangement (20) and at least one operating medium passage (78, 104) which is assigned to the second clutch arrangement (22), the effective flow cross sections of which operating medium passages are adjustable as a function of an axial position of a/the actuating piston (38 and 48) which is assigned to the respective clutch arrangement and is axially movable by hydraulic means counter to the action of a restoring spring arrangement.

13. The clutch device according to Claim 12, **characterized in that** the respective operating medium passage has at least one operating medium duct (80 and 78) in a component (50) of the clutch device which has a running face for the respective actuating piston, with at least one aperture opening of the operating medium duct being situated at least partially in the running face.

14. Combination according to Claim 13, **characterized by** a control edge which is assigned to the aperture opening and/or a passage opening (106 and 104) or passage cutout in a running section (100 and 102), which runs on the running face, of the actuating piston (38 and 48).

15. Combination according to one of the preceding claims and an assigned operating medium supply to which the clutch device (10) is or can be connected in order to be able to supply operating medium, if appropriate cooling oil, to the clutch arrangements which are supplied for running under the action of an operating medium, **characterized in that** at least one operating medium flow which is supplied to the first clutch arrangement (20) and at least one operating medium flow which is supplied to the second clutch arrangement (22) can be adjusted independently of one another or oppositely to one another with regard to the operating medium volume supplied per unit time.

16. Combination according to Claim 15, **characterized in that** the operating medium flows can be adjusted as a function of the actuating state of the respective clutch arrangement.

17. Combination according to Claim 16, **characterized in that** the rotor (190) is coupled to the drive output shaft (194) by means of a flexible plate arrangement (192).

18. Combination according to Claim 16 or 17, **characterized in that** the rotor (190) and an input hub (24) of the input side are in rotationally driving connection by means of a coupling arrangement (196) which is preferably embodied as a torsional vibration damper arrangement (196).

19. Combination according to one of Claims 16 to 18, **characterized in that** a carrier arrangement (182) which holds the stator (180) delimits a wet space for the clutch device (10).

## Revendications

1. Combinaison d'un système d'embrayage multiple, éventuellement d'un système d'embrayage double (10) et d'une machine électrique, éventuellement d'un agencement de démarreur d'arbre à came (180, 190) destiné à être disposé dans une chaîne cinématique entre une unité d'entraînement et une boîte de vitesses, le système d'embrayage présentant un premier agencement d'embrayage à disques (20) associé à un premier arbre d'entrée de boîte de vitesses (14) de la boîte de vitesses et un deuxième agencement d'embrayage à disques (22) associé à un deuxième arbre d'entrée de boîte de vitesses (16) de la boîte de vitesses, pour le transfert de couple entre l'unité d'entraînement et la boîte de vitesses,
au moins l'un (14, 16) des arbres d'entrée de boîte de vitesses étant réalisé sous forme d'arbre creux et l'un (14) des arbres d'entrée de boîte de vitesses s'étendant à travers un autre arbre d'entrée de boîte de vitesses (16) réalisé sous forme d'arbre creux,
le système d'embrayage (10) présentant un côté d'entrée (24) accouplé ou pouvant être accouplé directement ou indirectement à un arbre de prise de force de l'unité d'entraînement, le côté d'entrée étant ou pouvant être amené en liaison d'entraînement en rotation avec des disques du côté de l'entrée d'un premier paquet de disques (36) du premier agencement d'embrayage (20) et des disques du côté de l'entrée d'un deuxième paquet de disques (46) du deuxième agencement d'embrayage,
un support de disques (32 ; 110) du côté de la sortie du premier agencement d'embrayage étant accouplé ou pouvant être accouplé au premier arbre d'entrée de boîte de vitesses (14) dans le sens d'un entraînement en rotation et un support de disques (42 ; 110) du côté de la sortie du deuxième agencement d'embrayage (22) étant accouplé ou pouvant être accouplé au deuxième arbre d'entrée de boîte de vitesses (16) dans le sens d'un entraînement en rotation, **caractérisée en ce que**
le premier paquet de disques (36) et le deuxième paquet de disques (46) sont disposés axialement l'un à côté de l'autre par rapport à un axe de rotation commun (A), et
la machine électrique présentant un rotor (190) étant ou pouvant être amené en liaison d'entraînement en rotation avec l'arbre de prise de force et un stator (180) supporté par l'intermédiaire d'un boîtier de la boîte de vitesses et/ou d'un boîtier de l'unité d'entraînement, le rotor et le stator entourant radialement à l'extérieur, sous forme annulaire, le système d'embrayage (10).

2. Combinaison selon la revendication 1, **caractérisée en ce que** le premier (36) et le deuxième (46) paquet de disques sont disposés approximativement dans la même région radiale par rapport à l'axe de rotation (A) et présentent de préférence des diamètres intérieurs et extérieurs sensiblement égaux.

3. Combinaison selon la revendication 1 ou 2, **caractérisée en ce que** les agencements d'embrayage présentent un support de disques extérieurs (110) commun disposé du côté de l'entrée ou **en ce qu'**un premier support de disques extérieurs (32) appartenant au premier agencement d'embrayage et un deuxième support de disques extérieurs (42) appartenant au deuxième agencement d'embrayage, qui sont disposés du côté de l'entrée, sont connectés l'un à l'autre de manière solidaire en rotation, éventuellement sont soudés l'un à l'autre.

4. Combinaison selon l'une quelconque des revendications 1 à 3,
**caractérisée en ce que** les agencements d'embrayage peuvent être actionnés par le biais d'un cylindre récepteur hydraulique respectif intégré dans le système d'embrayage, un piston d'actionnement (38) appartenant au premier agencement d'embrayage et un piston d'actionnement (48) appartenant au deuxième agencement d'embrayage pouvant être déplacés au moyen du cylindre récepteur respectif à l'encontre de la force de rappel d'un agencement de ressort de rappel respectif (60, 62) dans la même direction axiale ou dans des directions axiales opposées, afin d'actionner l'agencement d'embrayage concerné dans le sens d'embrayage ou le sens de débrayage.

5. Combinaison selon la revendication 4,
**caractérisée en ce que** les pistons d'actionnement (38, 48) peuvent être déplacés à l'encontre de la force de rappel de l'agencement de ressort de rappel respectif axialement l'un vers l'autre ou axialement à l'écart l'un de l'autre ou tous les deux dans la direction de la boîte de vitesses ou tous les deux dans la direction de l'unité d'entraînement.

6. Combinaison selon l'une quelconque des revendications 1 à 5,
**caractérisée en ce que** le premier et le deuxième agencement d'embrayage sont construits en utilisant au moins une pièce identique, dont un exemplaire appartient au premier agencement d'embrayage (20) et au moins un exemplaire appartient au deuxième agencement d'embrayage (22).

7. Combinaison selon la revendication 6,
**caractérisée en ce qu'**au moins l'un des composants suivants ou au moins l'un des groupes de composants suivants sont réalisés sous forme de pièce identique ou de pièces identiques, et appartiennent, à chaque fois sous la forme d'au moins un exemplaire, au premier agencement d'embrayage (20) et sous la forme d'au moins un exemplaire, au deuxième agencement d'embrayage (22) :
- les disques extérieurs du premier (36) et du deuxième (46) paquets de disques,
- les disques intérieurs du premier (36) et du deuxième (46) paquets de disques,
- le piston d'actionnement (38, respectivement 48) du premier et du deuxième agencement d'embrayage,
- le support de disques extérieurs (32, respectivement 42) du premier et du deuxième agencement d'embrayage,
- au moins un ressort de rappel (60, respectivement 62) associé au premier et au deuxième agencement d'embrayage,
- au moins une partie de paroi (68, respectivement 70) associée au premier et au deuxième agencement d'embrayage, qui délimite une chambre de compensation de la pression de la force centrifuge,
- au moins une garniture d'étanchéité associée au cylindre récepteur du premier agencement d'embrayage et au cylindre récepteur du deuxième agencement d'embrayage,
- au moins une garniture d'étanchéité associée à la chambre de compensation de la pression de la force centrifuge du premier agencement d'embrayage et à la chambre de compensation de la pression de la force centrifuge du deuxième agencement d'embrayage.

8. Combinaison selon l'une quelconque des revendications 1 à 7, **caractérisée en ce que** les agencements d'embrayage (20, 22) sont prévus pour fonctionner sous l'action d'un fluide de travail, éventuellement de l'huile de refroidissement, **en ce que** le système d'embrayage présente au moins un raccord de fluide de travail, par le biais duquel du fluide de travail peut être acheminé à au moins l'un des deux agencements d'embrayage, et **en ce que** le système d'embrayage présente un système d'ajustement du flux (78, 104, 80, 106) ou un système d'ajustement du flux séparé est associé au système d'embrayage, au moyen duquel au moins un courant de fluide de travail acheminé au premier agencement d'embrayage (20) et au moins un courant de fluide de travail associé au deuxième agencement d'embrayage (22) peuvent être ajustés indépendamment l'un de l'autre ou en sens inverse l'un de l'autre en termes du volume de fluide de travail acheminé par unité de temps.

9. Combinaison selon la revendication 8,
**caractérisée en ce que**
les courants de fluide de travail peuvent être ajustés en fonction de l'état d'actionnement de l'agencement d'embrayage respectif (20, respectivement 22).

10. Combinaison selon l'une quelconque des revendications 8 ou 9,
**caractérisée en ce que** le système d'embrayage présente au moins un raccord de fluide de travail (96) par le biais duquel (à chaque fois) du fluide de travail peut être acheminé aux deux agencements d'embrayage, et **en ce que** le système d'ajustement du flux (78, 104, 80, 106) est intégré dans le système d'embrayage (10) et est disposé dans la région du raccord de fluide de travail ou en aval de celle-ci.

11. Combinaison selon l'une quelconque des revendications 8 à 10,
**caractérisée en ce que** le système d'ajustement du flux (78, 104, 80, 106), lors de l'actionnement du système d'embrayage respectif, agit dans le sens de l'embrayage dans le sens d'une augmentation du courant de fluide de travail acheminé à cet agencement d'embrayage ainsi qu'éventuellement dans le sens d'une réduction du courant de fluide de travail acheminé à l'autre agencement d'embrayage, et **en ce que** le système d'ajustement du flux, lors de l'actionnement du système d'embrayage respectif, agit dans le sens du débrayage dans le sens d'une réduction du courant de fluide de travail acheminé à cet agencement d'embrayage et éventuellement dans le sens d'une augmentation du courant de fluide de travail acheminé à l'autre agencement d'embrayage.

12. Combinaison selon les revendications 10 et 11, **caractérisée en ce que** le système d'ajustement du flux présente au moins un premier passage de fluide de travail (80, 106) associé au premier agencement d'embrayage (20) et au moins un deuxième passage de fluide de travail (78, 104) associé au deuxième agencement d'embrayage (22), dont les sections transversales d'écoulement actives peuvent être réglées en fonction d'une position axiale d'un/du piston d'actionnement (38, respectivement 48) déplaçable axialement de manière hydraulique à l'encontre de l'action d'un agencement de ressort de rappel et associé à l'agencement d'embrayage respectif.

13. Combinaison selon la revendication 12, **caractérisée en ce que** le passage de fluide de travail respectif présente au moins un canal de fluide de travail (80, respectivement 78) dans un composant (50) du système d'embrayage, qui présente une surface de roulement pour le piston d'actionnement respectif, au moins une ouverture d'embouchure du canal de fluide de travail se trouvant au moins en partie dans la surface de roulement.

14. Combinaison selon la revendication 13, **caractérisée par** une arête de commande associée à l'ouverture d'embouchure et/ou une ouverture de passage (106, respectivement 104) ou un évidement de passage dans une portion de roulement (100, respectivement 102) du piston d'actionnement (38, respectivement 48) roulant sur la surface de roulement.

15. Combinaison selon l'une quelconque des revendications précédentes, et alimentation en fluide de travail associée, à laquelle le système d'embrayage est raccordé ou peut être raccordé, afin de pouvoir acheminer du fluide de travail à des agencements d'embrayage prévus pour fonctionner sous l'effet d'un fluide de travail, éventuellement de l'huile de refroidissement, **caractérisée en ce**
**qu'**au moins un courant de fluide de travail acheminé au premier agencement d'embrayage (20) et au moins un courant de fluide de travail acheminé au deuxième agencement d'embrayage (22) peuvent être ajustés indépendamment l'un de l'autre ou en sens inverse l'un de l'autre en termes du volume de fluide de travail acheminé par unité de temps.

16. Combinaison selon la revendication 15, **caractérisée en ce que** les courants de fluide de travail peuvent être ajustés en fonction de l'état d'actionnement de l'agencement d'embrayage respectif.

17. Combinaison selon la revendication 16, **caractérisée en ce que** le rotor (190) est accouplé à l'arbre de prise de force (194) par le biais d'un agencement de plaque flexible (192).

18. Combinaison selon la revendication 16 ou 17, **caractérisée en ce que** le rotor (190) et un moyeu d'entrée (24) du côté d'entrée sont en liaison d'entraînement en rotation par le biais d'un agencement d'accouplement (196), qui est réalisé de préférence sous forme d'agencement d'amortisseur de vibrations de torsion (196).

19. Combinaison selon l'une quelconque des revendications 16 à 18,
**caractérisée en ce qu'**un agencement de support (182) retenant le stator (180) limite un espace humide pour le système d'embrayage (10).
